# DEMANDE DE BREVET EUROPEEN

(11) **EP 1 479 941 A1**
(43) Date de publication de la demande: **24.11.2004**
(21) Numéro de dépôt: 04300297.1
(22) Date de dépôt: 24.05.2004
(51) Int. Cl.: F16H 3/093

(54) **Boîte de vitesses manuelle à trois arbres parallèles**

(30) Priorité: 23.05.2003 FR 0306268
(71) Demandeur: Renault s.a.s., 92100 Boulogne Billancourt (FR)
(72) Inventeur: Raoul, M. Michel, 78990 Elancourt (FR)

(57) **Abrégé**

Boîte de vitesses (10) à arbres parallèles et à engrenages comportant un arbre primaire (20) et deux arbres secondaires non concentriques (50, 60) entraînant une même couronne de différentiel (70), caractérisée en ce que le premier arbre secondaire (60) porte un pignon de descente (51) attaquant directement la couronne (70) et en ce que le deuxième arbre secondaire auxiliaire (60) entraîne la couronne (70) par l'intermédiaire d'un arbre de renvoi intermédiaire (75) sur le premier arbre secondaire (50) et du pignon de descente (51).

## Description

L'invention concerne une boîte de vitesses manuelle de véhicule automobile.

Elle concerne plus particulièrement une boîte de vitesses à arbres parallèles et à engrenages comportant un arbre primaire et deux arbres secondaires non concentriques entraînant une même couronne de différentiel.

Selon une disposition connue dans de telles boîtes de vitesses, chaque arbre secondaire présente un pignon de descente attaquant la même couronne de différentiel.

Ces deux pignons de descente peuvent être de même taille ou de tailles différentes. Dans le premier cas les entraxes entre l'arbre primaire et chaque arbre secondaire sont différents. Généralement, une même denture fixe de l'arbre primaire engrène alors avec deux pignons fous portés chacun par un des arbres secondaires pour obtenir deux rapports de démultiplication différents. Cette disposition, appelée « triplette » réduit l'encombrement axial de la boîte, mais limite le choix des démultiplications.

Dans le second cas, les entraxes entre l'arbre primaire et chaque arbre secondaire sont en principe égaux, et on retrouve également dans la boîte au moins une « triplette », avec les avantages et les inconvénients particuliers liés à celle-ci.

Enfin, dans la plupart des boîtes de vitesses à trois arbres connues, l'un des arbres secondaires est en position dite basse, et le second en position haute. Les dispositifs de crabotage et les fourchettes de commande associés sont alors répartis entre le bas et le haut de la boîte et pour cette raison, le dispositif de commande des changements de rapports est complexe.

Pour remédier à ces inconvénients, l'invention propose que le premier arbre secondaire porte un pignon de descente attaquant directement la couronne et que le deuxième arbre secondaire entraîne la couronne par l'intermédiaire d'un arbre de renvoi intermédiaire sur le premier arbre secondaire, et du même pignon de descente.

Selon un mode de réalisation préféré de l'invention, la boîte de vitesses dispose de six rapports de marche avant. A cet effet, l'arbre primaire porte plusieurs dentures fixes engrenant avec des pignons fous de l'un ou l'autre des arbres secondaires dont au moins une denture fixe engrenant avec un pignon fou de marche avant et avec le pignon intermédiaire de marche arrière et au moins une denture fixe engrenant simultanément avec pignon fou de chacun des arbres secondaires.

Le problème de commande évoqué plus haut est résolu par le fait que les axes des arbres primaire et secondaires définissent un triangle, dont l'angle ayant pour sommet l'axe de l'arbre primaire est un angle ouvert orienté vers le haut. Les axes des arbres primaire et secondaires forment ainsi un V très ouvert vers le haut, dont le sommet est occupé par l'arbre primaire.

D'autres caractéristiques et avantages de l'invention apparaîtront clairement à la lecture de la description suivante d'un mode de réalisation particulier de celle-ci, en se référant aux dessins annexés sur lesquels :

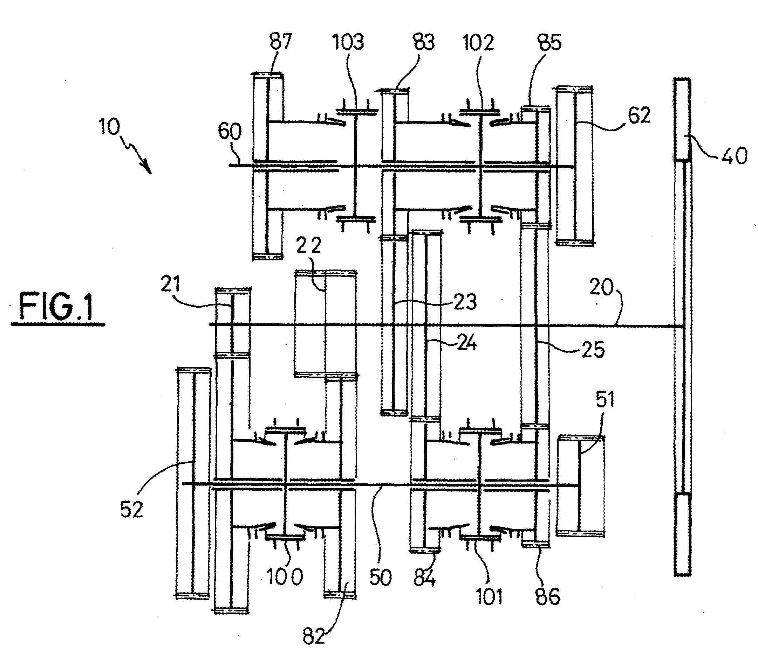

- la figure 1 est une vue schématique en coupe à plans rabattus, selon la ligne de la figure 4a passant par les axes des arbres secondaire auxiliaire, primaire et secondaire principal,
- la figure 2 est une vue schématique en coupe à plans rabattus, selon la ligne de la figure 4a passant par les axes des arbres secondaire auxiliaire, intermédiaire de marche arrière, primaire et secondaire principal,
- la figure 3 est une vue schématique en coupe à plans rabattus, selon une ligne de la figure 4a, passant par les axes des arbres secondaires auxiliaire, de renvoi intermédiaire et secondaire principal, et
- les figures 4a à 4d sont des vues selon la figure 2 représentant le cheminement du couple par l'arbre de renvoi intermédiaire montrant les différentes dispositions possibles d'une même pignonnerie.

La boîte de vitesses 10 illustrée par les figures comporte un premier arbre primaire plein 20 monté à rotation dans un carter (non représenté) et entraîné par un moteur par l'intermédiaire d'un embrayage 40. La boîte de vitesses comporte aussi un premier arbre secondaire 50 dit principal et un deuxième arbre secondaire 60 dit auxiliaire , également montés à rotation dans le carter.

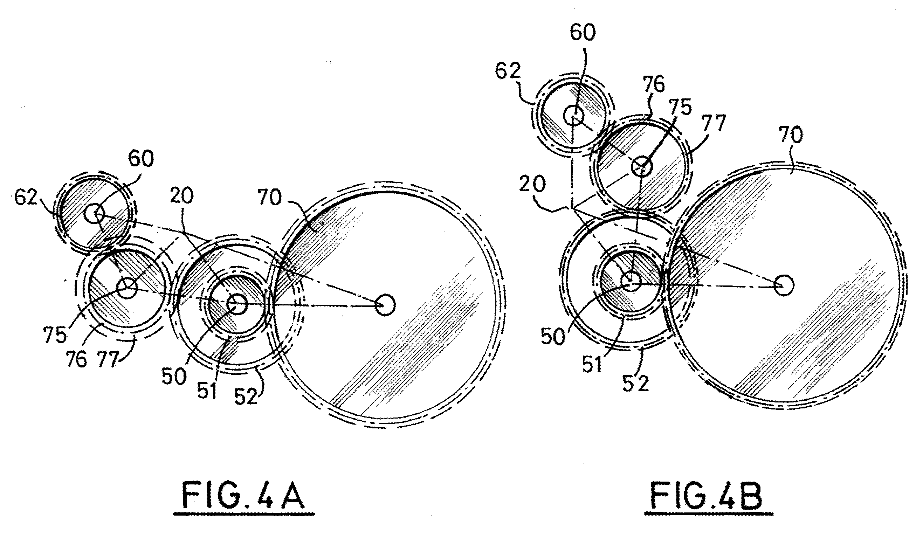

Comme le montre la figure 4a, les axes des arbres secondaires forment avec l'axe de l'arbre primaire un V très ouvert, dont le sommet est occupé par l'axe de l'arbre primaire. Conformément à l'invention, les axes des arbres primaire et secondaires définissent en effet un triangle, dont l'angle ayant pour sommet l'axe de l'arbre primaire est un angle obtus, ouvert le haut.

Des engrenages sont agencés entre l'arbre primaire 20 et les arbres secondaires 50 et 60 de manière à transmettre le couple du véhicule à un couronne 70 (représentée sur les figures 4a à 4d) d'un différentiel d'un pont (non représenté) entraînant les roues d'un véhicule. A cet effet, seul le premier arbre secondaire 50 comporte un pignon de descente 51 qui engrène avec la couronne 70 du différentiel. Le deuxième arbre secondaire 60 est lié en rotation au premier par un arbre de renvoi 75 portant des pignons fixes 76 et 77 engrenant avec les pignons fixes 52 et 62 portées respectivement par les arbres secondaires 50 et 60.

Les engrenages sont constitués de dentures fixes 21, 22, 23, 24 et 25 portés par l'arbre primaires 20, qui engrènent avec des pignons fous qui sont portés par les arbres secondaires 50 et 60. Ces pignons fous sont susceptibles d'être sélectivement liés en rotation aux premier et second arbres secondaires 50 et 60 par des moyens de crabotage indépendants pour réaliser des engrenages indépendants correspondant sélectivement à au moins deux rapports de marche avant et un rapport de marche arrière.

La première denture 21 de l'arbre 20 engrène avec un unique pignon fou 81, porté par le premier arbre secondaire 50, pour constituer le rapport de première. La seconde denture 22 engrène avec deux pignons, le pignon fou 82 et le pignon 90 intermédiaire de marche arrière, respectivement portés par le premier arbre secondaire 50 pour constituer le rapport de deuxième et par l'arbre de renvoi 75. La troisième denture fixe 23 engrène avec un seul pignon fou 83 porté par l'arbre secondaire auxiliaire 60, pour constituer le rapport de troisième, le quatrième pignon fixe 24 engrène avec un seul pignon fou 84 porté par l'arbre secondaire principal 50, pour constituer le rapport de cinquième.

Enfin, la cinquième denture fixe 25 de l'arbre primaire 20 engrène avec deux pignons fous 85 et 86 portés respectivement par les arbres secondaires 60 et 50 pour constituer les rapports de quatrième et de sixième. Le rapport de marche arrière a son propre pignon fou 87, porté par le second arbre secondaire 60, qui engrène avec un second pignon intermédiaire 91, porté par l'arbre intermédiaire 75, lié en rotation avec le premier pignon intermédiaire 90 qui engrène avec la denture fixe 22.

En résumé, l'arbre primaire porte plusieurs dentures fixes engrenant avec des pignons fous de l'un ou l'autre des arbres secondaires dont au moins une denture fixe engrenant avec un pignon fou de marche avant et avec le pignon intermédiaire de marche arrière et une denture fixe engrenant simultanément avec pignon fou de chacun des arbres secondaires. Cette disposition permet d'obtenir au moins six rapports de marche avant et un rapport de marche arrière.

Tous les pignons fous peuvent être sélectivement liés aux arbres secondaires qui les portent par des dispositifs de crabotage simple ou double. Les pignons fous 81, 82, 84 et 86 peuvent être liés sélectivement à l'arbre secondaire 50 qui les porte et les pignons fous 83, 85 et 87 peuvent être sélectivement liés à l'arbre secondaire 60 qui les porte.

Un premier dispositif de crabotage double 100 permet de lier sélectivement en rotation à l'arbre secondaire 50 le pignon fou 81 pour obtenir le rapport de première, ou le pignon fou 82, pour obtenir le rapport de deuxième. Un second dispositif de crabotage double 101 permet de lier en rotation à l'arbre secondaire 50 le pignon fou 84 pour obtenir le rapport de cinquième, ou le pignon fou 86 pour obtenir le rapport de sixième.

Un troisième dispositif de crabotage double 102 permet de lier sélectivement en rotation à l'arbre secondaire 60 le pignon fou 83 pour obtenir le rapport de troisième, ou le pignon fou 85 pour obtenir le rapport de quatrième. Enfin, un crabot simple 103 permet de lier sélectivement en rotation à l'arbre secondaire 60 le pignon fou 87 pour obtenir le rapport de marche arrière.

Ces dispositifs permettent d'obtenir l'ensemble des six rapports avant et le rapport de marche arrière. Le groupement des pignons permet de reconstituer une grille de vitesses conventionnelle sans devoir utiliser de d'inverseur de mouvement car pour engager les rapports impairs il suffit de déplacer les baladeurs 100, 101 et 102 vers la gauche et pour engager les rapports pairs il suffit de les déplacer vers la droite.

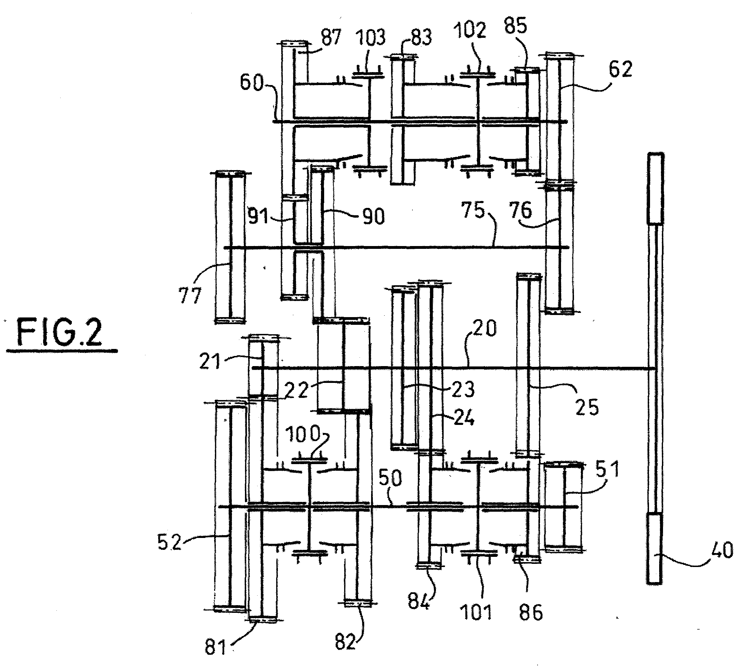

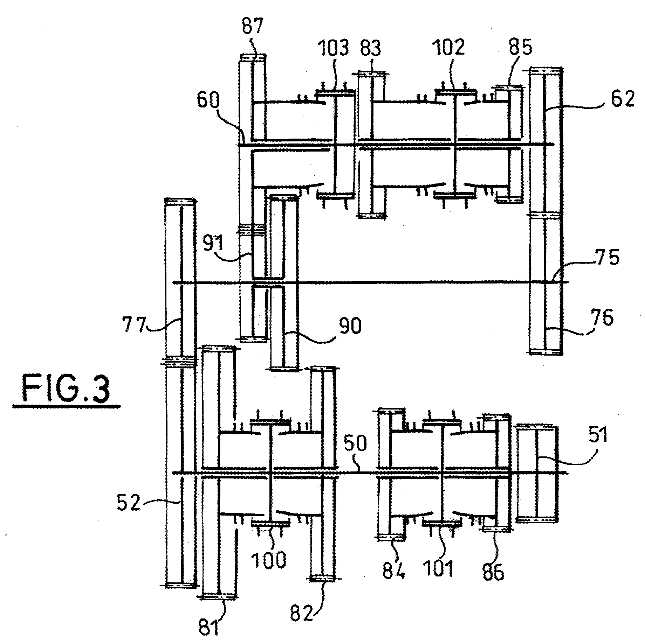

On remarque sur les figures 2 et 3 que les pignons de renvoi 62 et 76 sont disposés dans la même tranche axiale que le pignon de descente 51. La boîte de vitesses proposée par l'invention est donc aussi compacte qu'une boîte de vitesses conventionnelle à deux arbres secondaires ayant chacun un pignon d'attaque.

Les distances entre les axes de l'arbre primaire 20 et l'axe de chaque arbre secondaire 50, 60 peuvent être différentes. Dans le cadre de l'invention, elles sont de préférence identiques, à condition de choisir également des dispositifs de crabotage identiques, car cette disposition permet d'utiliser les mêmes pignons fous. Conformément à l'invention, les pignons 85 du rapport de quatrième et 86 du rapport de sixième peuvent donc être identiques.

L'invention propose que les roues dentées 52 du premier arbre secondaire 50, 62 du deuxième arbre secondaire 60 et 76 , 77 de l'arbre de renvoi des rapports aient un nombre de dents appropriés pour obtenir des rapports différents à partir d'une même denture pignon fixe engrenant avec deux pignons fous identiques.

On peut décider, par exemple, que les nombres de dents combinés des pignons 62 et 76 d'une part et 77 et 52 d'autre part peuvent donnent un rapport de réduction significatif de l'ordre de 1,4 à 1,7.pour obtenir les rapports de sixième et de quatrième à partir de la même denture fixe 25 et de pignons fous 85 et 86 identiques. De façon analogue, on peut obtenir les rapports de cinquième et de troisième à partir d'une seule denture fixe et de pignons fous identiques.

Les figures 4a à 4d montrent différentes dispositions possibles d'une même ensemble de pignons. Sur la figure 4a, le pignon de descente 51 est en bas, sous la ligne passant par l'axe de l'arbre primaire et du différentiel. L'arbre de renvoi est également bas, c'est-à-dire en dessous de cette même ligne.

Sur la figure 4b, le pignon de descente 51 est aussi en bas, sous la ligne passant par l'axe de l'arbre primaire et l'axe du différentiel. Cependant, l'arbre de renvoi et le deuxième arbre secondaire 60 sont en haut, c'est-à-dire au dessus de cette même ligne.

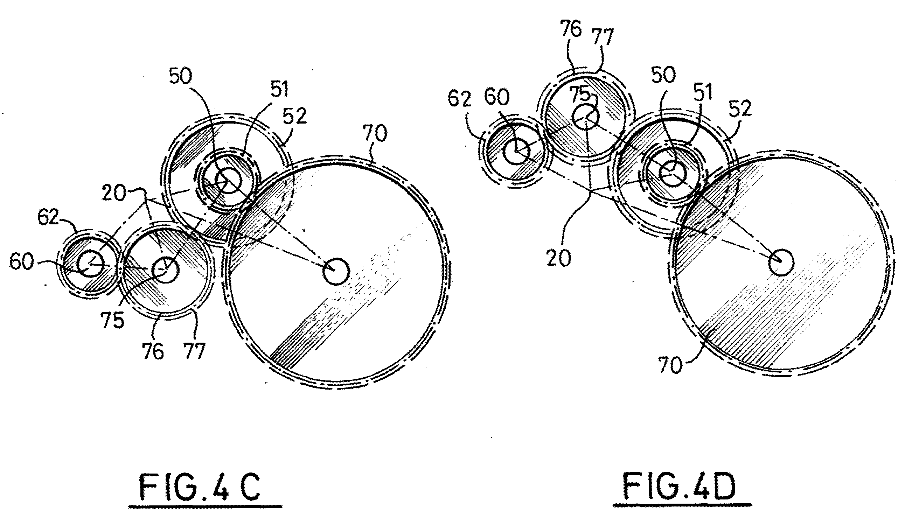

Sur la figure 4c, le pignon de descente 51 est en haut, au dessus de la ligne passant par l'axe de l'arbre primaire axe et du différentiel. Toutefois, l'arbre de renvoi et le deuxième arbre secondaire sont en bas, c'est-à-dire en dessous de cette même ligne.

Enfin, sur la figure 4d, le pignon de descente 51 est en haut, au dessus de la ligne passant par l'axe de l'arbre primaire et du différentiel, mais l'arbre de renvoi et le deuxième arbre secondaire 60 sont en haut, c'est-à-dire au dessus de cette même ligne.

En se référant à la figure 2 et à l'une des figures 4a à 4d, le cheminement du couple du moteur à la couronne de différentiel selon le rapport de marche arrière est le suivant. Le couple est transmis du moteur à l'arbre primaire 20 par l'embrayage 40 fermé, puis de la denture fixe 22 au premier pignon intermédiaire de marche arrière 90 lié au second pignon intermédiaire 91, puis du second pignon intermédiaire de marche arrière 91 au pignon fou 87 de marche arrière qui le transmet à l'arbre secondaire 60 par l'intermédiaire du crabot double 103 en position craboté sur le pignon 87, puis de l'arbre secondaire 60 au pignon 62, puis au pignon fixe 76 de l'arbre de renvoi intermédiaire 75, et enfin de l'arbre de renvoi intermédiaire 75 au pignon fixe 77 qui transmet le mouvement au pignon fixe 52 de l'arbre secondaire principal 50 qui le transmet, par l'intermédiaire du pignon de descente 51 à la couronne 70.

Le cheminement de couple est similaire pour les rapports de troisième et de quatrième puisque les pignons fous 83 et 85 sont portés par l'arbre secondaire auxiliaire 60.

Le cheminement du couple du moteur à la couronne de différentiel selon le rapport de première est le suivant. Le couple est transmis du moteur à l'arbre primaire 20 par l'embrayage 40 fermé, puis de la denture fixe 21 au pignon fou 81, puis du pignon fou 81 à l'arbre secondaire 50 par le crabot double 100 en position craboté sur le pignon 81, et enfin, de l'arbre secondaire 50 au pignon fixe 51 qui le transmet à la couronne 70.

Le cheminement de couple est similaire pour les rapports de deuxième, cinquième et sixième puisque les pignons fous 82, 84, et 86 sont portés par l'arbre secondaire auxiliaire 50.

## Revendications

1. Boîte de vitesses à arbres parallèles et à engrenages comportant un arbre primaire (20) et deux arbres secondaires non concentriques (50, 60) entraînant une même couronne de différentiel (70), **caractérisée en ce que** le premier arbre secondaire (60) porte un pignon de descente (51) attaquant directement la couronne (70) et **en ce que** le deuxième arbre secondaire auxiliaire (60) entraîne la couronne (70) par l'intermédiaire d'un arbre de renvoi intermédiaire (75) sur le premier arbre secondaire (50) et du pignon de descente (51).

2. Boîte de vitesses selon la revendication 1, **caractérisée en ce que** l'arbre intermédiaire (75) porte deux pignons fixes (77, 76) engrenant respectivement avec un pignon fixe (52) du premier arbre secondaire (50) et avec un pignon fixe (62) du deuxième arbre secondaire (60).

3. Boîte de vitesses selon la revendication 1 ou 2, **caractérisée en ce que** l'arbre intermédiaire (75) porte un pignon intermédiaire de marche arrière (90, 91) engrenant avec une denture fixe (22) de l'arbre primaire (20) et avec un pignon fou de marche arrière (87) crabotable sur un des arbres secondaire (60).

4. Boîte de vitesses selon la revendication 3, **caractérisée en ce que** le pignon intermédiaire (90, 91) tourne fou sur l'arbre intermédiaire (75).

5. Boîte de vitesses 10 selon l'une des revendications précédentes, **caractérisée en ce que** l'arbre primaire (20) porte plusieurs dentures fixes (21, 22, 23, 24, 25) engrenant avec des pignons fous (81, 82, 83, 84, 85 86), de l'un ou l'autre des arbres secondaires (50, 60), dont au moins une denture fixe (22) engrenant avec un pignon fou de marche avant (82) et avec le pignon intermédiaire de marche arrière (90), et une denture fixe (25) engrenant simultanément avec pignon fou (85, 86) de chacun des arbres secondaires.

6. Boîte de vitesses selon l'une des revendications 2 à 5, **caractérisée en ce que** le rapport de réduction des pignons fixes (62, 76, 77, 52) assurant le transfert du mouvement entre les deux arbres secondaires (50, 60) donne le ratio du rapport de quatrième sur le rapport de sixième ou celui du rapport de troisième sur le rapport de cinquième.

7. Boîte de vitesses selon l'une des revendications précédentes, **caractérisé en ce que** les axes des arbres primaire et secondaires (20, 50, 60) définissent un triangle, dont l'angle ayant pour sommet l'axe de l'arbre primaire (20) est un angle obtus, d'orientation quelconque.

8. Boîte de vitesses 10 selon l'une des revendications précédentes, **caractérisée en ce que** la descente d'engrenages (62, 76) du deuxième arbre secondaire (60) sur l'arbre intermédiaire (75) est située dans le même espace axial que le pignon de descente (51).

9. Boîte de vitesses selon l'une des revendications précédentes, **caractérisée en ce que** l'arbre primaire (20) est équidistant des axes des arbres secondaires (60, 50).

10. Boîte de vitesses 10, selon l'une des revendications 6 à 9), **caractérisée en ce que** les dentures des pignons fous (85, 86) des rapports de quatrième et de sixième sont identiques.
